# EUROPEAN PATENT SPECIFICATION

(11) **EP 2 091 982 B1**
(45) Date of publication and mention of the grant of the patent: **24.04.2013**
(21) Application number: 07857334.2
(22) Date of filing: 10.12.2007
(51) Int. Cl.: C08F 220/14, C08F 20/14, C08F 290/06

(54) **IMPROVEMENTS RELATING TO BRANCHED ORGANIC-INORGANIC POLYMERS**
VERBESSERUNGEN IN ZUSAMMENHANG MIT VERZWEIGTEN ORGANISCHEN-ANORGANISCHEN POLYMEREN
AMÉLIORATIONS RELATIVES AUX POLYMÈRES ORGANIQUES -- INORGANIQUES RAMIFIÉS

(30) Priority: 12.12.2006 EP 06125943
(43) Date of publication of application: 26.08.2009
(73) Proprietor: Unilever PLC, London EC4Y 0DY (GB); Unilever N.V., 3013 AL Rotterdam (NL)
(72) Inventor: FINDLAY, Paul Hugh, Bebington Wirral Merseyside CH63 3JW (GB); RANNARD, Steven Paul, Mickle Trafford Chester CH2 4EJ (GB); ROYLES, Brodyck James Lachlan, Bebington Wirral Merseyside CH63 3JW (GB); WEAVER, Jonathan Victor Mark, Hoole Chester CH2 3PN (GB)
(74) Representative: Teasdale, Nicola Joanne
(86) International application number: PCT/EP2007/063614
(87) International publication number: WO 2008/071660

(56) References cited:
- EP-A- 0 352 339
- EP-B1- 0 583 259
- EP-B1- 1 235 866
- WO-A-96/35732
- DE-A1-102004 053 314
- US-A- 4 994 538
- US-A1- 2004 087 753

## Description

The present invention relates to branched organic-inorganic polymers having polymers of organic monomers and discrete regions comprising polymers or inorganic monomers, in particular the inorganic monomers comprise poly di-alkyl siloxanes.

Many classes of organic polymers are known. This group of polymers is characterized by a carbon backbone although heteroatoms may be present, particularly at the linkages between the monomers. Among the best known organic polymers are the polymers which are formed from monofunctional vinylic monomers of the general form H₂C=C(R¹)-COOR², where R¹ is hydrogen in the case of acrylate and methyl in the case of methacrylate. These linear polymers with pendant carboxylic acid or ester groups are often water-soluble.

Branched polymers are polymer molecules of a finite size, which are branched. Branched polymers differ from crosslinked polymer networks as the latter tend towards an essentially infinite size and are generally not soluble.

Branched polymers often have advantageous properties when compared to analogous linear polymers. Higher molecular weight branched copolymers can be brought into solution more easily than corresponding linear polymers and solutions of branched polymers are normally less viscous than solutions of corresponding linear polymers. Branched polymers can exhibit strong surface-modification properties.

Branched organic polymers are known to be prepared via a step-growth mechanism involving the poly-condensation of a mixture of mono-functional and multi-functional monomers. The mono-functional monomers (for example methacrylates) polymer chains and where a multi-functional monomer is introduced into the chain a branch point is formed.

WO 99/46301 discloses a method of preparing a branched polymer comprising the steps of mixing together a mono-functional vinylic monomer with from 0.3 to 100% w/w (of the weight of the mono-functional monomer) of a multi-functional vinylic monomer and from 0.0001 to 50% w/w (of the weight of the mono-functional monomer) of a chain transfer agent and optionally a free-radical polymerisation initiator. The examples of WO 99/46301 describe the preparation of primarily hydrophobic polymers and, in particular, polymers in which methyl methacrylate constitutes the mono-functional monomer. These polymers are useful as components of surface coatings and inks or as moulding resins.

Poly-siloxanes are one well-known class of inorganic polymers. These have a backbone in which the repeat unit is [-SiR¹R²-O-]. Perhaps the most commercially important siloxane polymer is poly[dimethylsiloxane] (PDMS). PDMS is one of the most flexible chain molecules known, both in the dynamic sense and in the equilibrium sense (in part due to the diminution of steric interferences and intramolecular congestion compared to organic polymers). Siloxane polymers are widely used in a number of products including hair, skin and fabric conditioning products. Siloxane polymers are generally not water-soluble.

There is a need to combine the properties of organic and inorganic polymers to obtain new hybrid materials with benefits derived from each class of structure.

We have now determined how to manufacture hybrid, branched organic/inorganic polymers in a controllable manner. These new polymers have regions that are exclusively organic as regards the nature of the polymer backbone and regions that are exclusively inorganic as regards the nature of the backbone.

Accordingly, the present invention provides a branched, non-crosslinked, hybrid polymer obtainable by an addition (preferably free-radical) polymerisation process, comprising organic chains and inorganic chains wherein:
(a) said polymer comprises at least two organic chains which are covalently linked by a bridge other than at their ends, wherein the polymer contains 1 - 50 mole % of multifunctional monomer based on the number of moles of monofunctional monomer;
(b) at least one inorganic chain is present, either as a covalently-bonded pendant group on an organic chain or within the bridge, and
(c) the polymer comprises a residue of a chain transfer agent and a residue of an initiator wherein the residue of the chain transfer agent comprises 0.05 to 50 mole % of the copolymer, based on the number of moles of mono-functional monomer and wherein the chain transfer agent is selected from the group consisting of :C₂ - C₁₈ alkyl thiols, dodecane thiol, thioglycolic acid, thioglycerol, cysteine, and cysteamine and thiol-containing oligomers, oligo (cysteine) or an oligomer which has been post-functionalised to give a thiol group, oligoethylene glycolyl (di) thioglycollate.

Preferably, the inorganic chain comprises a poly [di-alkyl siloxane] oligomer. The invention will be described herein with particular reference to branched polymers which comprise poly [di-alkyl siloxane] oligomers although the use of other inorganic oligomers is not excluded.

The inorganic chains may be present as 'piers', which are attached to one (or more) of the linked organic chains. The inorganic chains may comprise part of the bridge between the organic chains or the bridge may be organic in nature.

A further aspect of the present invention provides a method of synthesising hybrid organic/inorganic polymers by an addition polymerisation process, which comprise reacting:
(a) an organic mono-functional monomer,
(b) an organic multi-functional non-terminating bridging species having terminal groups which are each co-polymerisable with (a), and/ or
(c) an inorganic multifunctional or monofunctional species having terminal group(s) which are copolymerisable with (a).

In this method, the mono-functional organic monomers form the backbone of the organic chain by polymerisation. As an illustrative example, the monomer (a) can be an acrylic acid, which polymerises to produce a poly-acrylate.

Where the bridging species (b) is incorporated into the chain, the chain branches as chain propagation can continue in the initial chain after the introduction of the bridging species and on the other side of the residue of the bridging species. This results in a molecular structure in which there are at least two carbon-backbone chains (polymers of (a)) linked by a residue of the bridging species (b).

The bridging species (b) can be entirely organic as regards the nature of its backbone or may have organic terminal groups and an intermediate portion that is inorganic.

In the former case, an illustrative example of a bridging species is the di-ester of methacrylic acid and a glycol:

H₂C=C(CH₃)-CO-O-(CH₂-CH₂-0)ₙ-CO-C(CH₃)=CH₂

where n=1 or more.

In the latter case the bridge is derivable from a non-terminating inorganic oligomer having at least two terminal groups at different ends which are co-polymerisable with the carbon-chain monomer(a). An illustrative example of a siloxane containing bridging group is shown below:

H₂C=C(CH₃)-CO-O-(CH₂)ₘ-(Si(CH₃)₂-0-)ₙ-(Si (CH₃)₂)-(CH₂)ₘ-CO-C(CH₃)=CH₂

While the inorganic region of the bridging species may be the only inorganic region of the finished branched polymer, regions of inorganic nature (as regards their backbone) can be incorporated into the growing carbon-backbone chain by the incorporation of a non-terminating mono-functional inorganic oligomer having one terminal group which is co-polymerisable with the carbon-chain monomer(a) to form the 'pier' groups. An illustrative example of this is the methacrylate terminated siloxane shown below:

H₂C=C(CH₃)-CO-O-(CH2)ₘ-(Si(CH₃)₂-0-)ₙ-T

Where T is a non-polymerising terminal group dependent on the method of synthesis.

In the case where the bridge (b) contains the inorganic polymer (c) then (b) and (c) are the same in the sense that (b) is an inorganic polymer of type (c) comprising at least two terminal groups which are co-polymerisable with (a).

In a particularly preferred embodiment of the invention the organic chains are hydrophilic in nature (as illustrated above by the acrylate examples). This makes the polymers water-soluble. The combination of water-solubility with the properties of the inorganic, preferably siloxane oligomer, regions provides particularly useful properties in the polymer.

### Definitions

The following definitions pertain to chemical structures, molecular segments and substituents:

The term "alkyl" as used herein refers to a branched or unbranched saturated hydrocarbon group which may contain from 1 to 12 carbon atoms, such as methyl, ethyl, n-propyl, isopropyl, n-butyl, isobutyl, t-butyl, octyl, decyl etc. More preferably, an alkyl group contains from 1 to 6, preferably 1 to 4 carbon atoms. Methyl, ethyl and propyl groups are especially preferred. "Substituted alkyl" refers to alkyl substituted with one or more substituent groups.

Preferably, alkyl and substituted alkyl groups are unbranched.

Typical substituent groups include, for example, halogen atoms, nitro, cyano, hydroxyl, cycloalkyl, alkyl, alkenyl, haloalkyl, alkoxy, haloalkoxy, amino, alkylamino, dialkylamino, formyl, alkoxycarbonyl, carboxyl, alkanoyl, alkylthio, alkylsulfinyl, alkylsulfonyl, alkylsulfonato, arylsulfinyl, arylsulfonyl, arylsulfonato, phosphinyl, phosphonyl, carbamoyl, amido, alkylamido, aryl, aralkyl and quaternary ammonium groups, such as betaine groups. Of these substituent groups, halogen atoms, cyano, hydroxyl, alkyl, haloalkyl, alkoxy, haloalkoxy, amino, carboxyl, amido and quaternary ammonium groups, such as betaine groups, are particularly preferred. When any of the foregoing substituents represents or contains an alkyl or alkenyl substituent group, this may be linear or branched and may contain up to 12, preferably up to 6, and especially up to 4, carbon atoms. A cycloalkyl group may contain from 3 to 8, preferably from 3 to 6, carbon atoms. An aryl group or moiety may contain from 6 to 10 carbon atoms, phenyl groups being especially preferred. A halogen atom may be a fluorine, chlorine, bromine or iodine atom and any group which contains a halo moiety, such as a haloalkyl group, may thus contain any one or more of these halogen atoms.

Terms such as "(meth)acrylic acid" embrace both methacrylic acid and acrylic acid. The term "(meth)acrylic acid residue" refers to the residue of the (meth)acrylic acid in salts, esters and siloxane derivatives of (meth)acrylic acid. Analogous terms should be construed similarly.

Terms such as "alk/aryl" embrace alkyl, alkaryl, aralkyl (e.g. benzyl) and aryl groups and moieties.

Molar percentages are based on the total mono-functional monomer content.

Molecular weights of monomers and polymers are expressed as weight average molecular weights, except where otherwise specified.

### Structure of the Copolymers

The branched polymers of the invention are branched, non-crosslinked, addition polymers and include statistical, gradient and alternating branched copolymers.

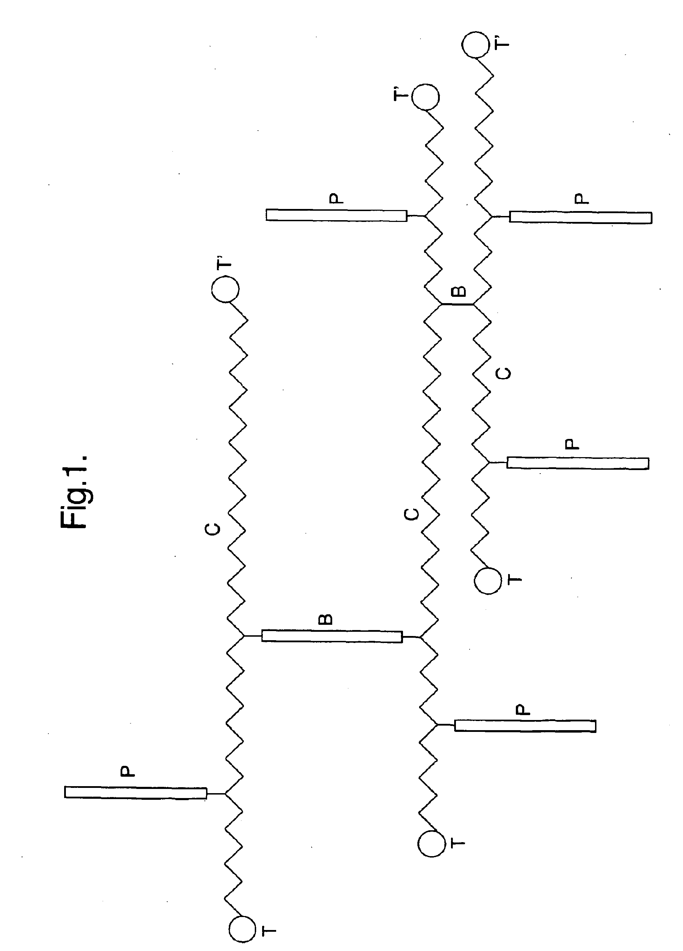

The general structure of the polymers is illustrated in figure 1. In that figure (which is schematic only) the organic chains are shown as solid lines and labeled 'C'. The inorganic oligomers are shown as oblong boxes (as at 'A' and 'P'). The linking groups between the chains are either entirely organic (as at 'B') or contain oligomeric inorganic regions (as at 'A'). Provided there is at least one 'pier' chain of the type indicated in Figure 1 as 'P' all of the linking groups can be of type 'B'.

The components of the co-polymers are described in further detail below citing an illustrative example and then discussing the alternative chemistries that may be employed.

### The monomer:

A preferred class of co-polymerization reactions in the present invention is that in which the organic monomer (a) is a vinyl monomer, for example, comprising (meth)acrylic acid (or a mixture of (meth)acrylic acids) of the general form (I) shown below:

H₂C=C(R¹)C(O)O(R₂) (I)

Where R1 is hydrogen or a substituent, preferably alk/aryl and R2 is hydrogen or a substituent.

The monofunctional monomer may however comprise any carbon-carbon unsaturated compound which can be polymerised by an addition polymerisation mechanism, e.g. vinyl and allyl compounds. The monofunctional monomer may be hydrophilic, hydrophobic, amphiphilic, anionic, cationic, neutral or zwitterionic in nature. Thus, the monofunctional monomer may be selected from but not limited to monomers such as vinyl acids, vinyl acid esters, vinyl aryl compounds, vinyl acid anhydrides, vinyl amides, vinyl ethers, vinyl amines, vinyl aryl amines, vinyl nitriles, vinyl ketones, and derivatives of the aforementioned compounds as well as corresponding allyl variants thereof.

Other suitable monofunctional monomers include hydroxyl-containing monomers and monomers which can be post-reacted to form hydroxyl groups, acid-containing or acid functional monomers, zwitterionic monomers and quaternised amino monomers.

Oligomeric or oligo-functionalised monomers may also be used, especially oligomeric (meth)acrylic acid esters such as mono(alk/aryl) (meth)acrylic acid esters of oligo[alkyleneglycol] or oligo[dimethylsiloxane] (see the description of the 'bridge' groups below) or any other mono-vinyl or allyl adduct of a low molecular weight oligomer.

Mixtures of more than one monomer may also be used to give statistical, gradient or alternating copolymers.

Preferred vinyl acids and derivatives thereof include (meth)acrylic acid and acid halides thereof such as (meth)acryloyl chloride. Preferred vinyl acid esters and derivatives thereof include C1-20 alkyl(meth)acrylates (linear & branched) such as methyl (meth)acrylate, stearyl (meth)acrylate and 2-ethyl hexyl (meth)acrylate, aryl(meth)acrylates such as benzyl (meth)acrylate, tri(alkyloxy)silylalkyl(meth)acrylates such as trimethoxysilylpropyl(meth)acrylate and activated esters of (meth)acrylic acid such as N-hydroxysuccinamido (meth)acrylate. Vinyl aryl compounds and derivatives thereof include styrene, acetoxystyrene, styrene sulfonic acid, vinyl pyridine, vinylbenzyl chloride and vinyl benzoic acid. Vinyl acid anhydrides and derivatives thereof include maleic anhydride. Vinyl amides and derivatives thereof include (meth)acrylamide, N-vinyl pyrrolidone, N-vinyl formamide, (meth)acrylamidopropyl trimethyl ammonium chloride, [3-((meth)acrylamido)propyl]dimethyl ammonium chloride, 3-[N-(3-(meth)acrylamidopropyl)-N,N-dimethyl]aminopropane sulfonate, methyl (meth)acrylamidoglycolate methyl ether and N-isopropyl(meth)acrylamide. Vinyl ethers and derivatives thereof include methyl vinyl ether. Vinyl amines and derivatives thereof include dimethylaminoethyl (meth)acrylate, diethylaminoethyl (meth)acrylate, diisopropylaminoethyl (meth)acrylate, mono-t-butylaminoethyl (meth)acrylate, morpholinoethyl(meth)acrylate and monomers which can be post-reacted to form amine groups, such as vinyl formamide. Vinyl aryl amines and derivatives thereof include vinyl aniline, vinyl pyridine, N-vinyl carbazole and vinyl imidazole. Vinyl nitriles and derivatives thereof include (meth)acrylonitrile. Vinyl ketones and derivatives thereof include acrolein.

Hydroxyl-containing monomers include vinyl hydroxyl monomers such as hydroxyethyl (meth)acrylate, hydroxy propyl (meth)acrylate, glycerol mono(meth)acrylate and sugar mono(meth)acrylates such as glucose mono(meth)acrylate. Monomers which can be post-reacted to form hydroxyl groups include vinyl acetate, acetoxystyrene and glycidyl (meth)acrylate. Acid-containing or acid functional monomers include (meth)acrylic acid, styrene sulfonic acid, vinyl phosphonic acid, vinyl benzoic acid, maleic acid, fumaric acid, itaconic acid, 2-(meth)acrylamido 2-ethyl propanesulfonic acid, mono-2-((meth)acryloyloxy)ethyl succinate and ammonium sulfatoethyl (meth)acrylate. Zwitterionic monomers include (meth)acryloyl oxyethylphosphoryl choline and betaines, such as [2-((meth)acryloyloxy)ethyl] dimethyl-(3-sulfopropyl)ammonium hydroxide. Quaternised amino monomers include (meth)acryloyloxyethyltri-(alk/aryl)ammonium halides such as (meth)acryloyloxyethyltrimethyl ammonium chloride.

Oligomeric (or polymeric) monomers include oligomeric (meth)acrylic acid esters such as mono(alk/aryl)oxyoligo-alkyleneoxide(meth)acrylates and mono(alk/aryl)oxyoligo-dimethyl-siloxane(meth)acrylates. These esters include monomethoxy oligo(ethyleneglycol) mono(meth) acrylate, monomethoxy oligo(propyleneglycol) mono(meth)acrylate, monohydroxy oligo(ethyleneglycol) mono(meth)acrylate and monohydroxy oligo(propyleneglycol) mono(meth)acrylate. Further examples include vinyl or allyl esters, amides or ethers of pre-formed oligomers formed via ring-opening polymerisation such as oligo(caprolactam) or oligo(caprolactone), or oligomers formed via a living polymerisation technique such as oligo(1,4-butadiene). The polymeric monomers are the same, save that the oligomers are polymers.

Macromonomers are generally formed by linking a polymerisable moiety, such as a vinyl or allyl group, to a pre-formed monofunctional polymer via a suitable linking unit such as an ester, an amide or an ether. Examples of suitable polymers include mono functional poly(akylene oxide) such as monomethoxy[poly(ethyleneoxide) or monomethoxy [poly-(propyleneoxide), silicones such as poly(dimethylsiloxane), polymers formed by ring-opening polymerisation such as poly(caprolactone) or poly(caprolactam) or mono-functional polymers formed via living polymerisation such as poly(1,4-butadiene).

Preferred macromonomers include monomethoxy[poly-(ethyleneglycol)] mono(methacrylate), monomethoxy[poly-(propyleneglycol)] mono(methacrylate), poly(dimethylsiloxane) monomethacrylate.

The corresponding allyl monomers to those listed above can also be used where appropriate.

More preferred monomers include:
amide-containing monomers such as (meth)acrylamide, N,N'-dimethyl(meth)acrylamide, N and or N'-di(alkyl or aryl) (meth)acrylamide, N-vinyl pyrollidone,
(meth)acrylamidopropyl trimethyl ammonium chloride, [3-(methacroylamino) propyl]dimethyl ammonium chloride, 3-[N-(3-methacrylamido-propyl)-N,N-dimethyl]aminopropane sulfonate, 4-(2-acrylamido-2-methylpropyldimethylammonio) butanoate, methyl acrylamidoglycolate methyl ether and N-isopropyl-(meth)acrylamide;
(meth)acrylic acid derivatives such as (meth)acrylic acid, (meth)acryoloyl chloride (or any halide), (alkyl/aryl) (meth)acrylate, oligo-functionalised monomers such as monomethoxy poly(ethyleneglycol) monomethacrylate or monomethoxy poly(propyleneglycol) mono(meth)acrylate, glycerol mono(meth)acrylate, glycidyl (meth)acrylate and sugar mono(meth)acrylates such as glucose mono(meth)acrylate;
vinyl amines such as dimethylaminoethyl (meth)acrylate, diethylaminoethyl (meth)acrylate, t-butylamino (meth)acrylate, morpholinoethylmethacrylate, or vinyl aryl amines such as vinyl aniline, vinyl pyridine, N-vinyl carbazole, vinyl imidazole;
vinyl aryl monomers such as styrene, vinyl benzyl chloride, vinyl toluene, α-methyl styrene, styrene sulfonic acid and vinyl benzoic acid;
vinyl hydroxyl monomers such as hydroxyethyl (meth)acrylate, hydroxy propyl (meth)acrylate, glyceryl (meth)acrylate or monomers which can be post-functionalised into hydroxyl groups such as vinyl acetate or acetoxy styrene can also be used;
acid-containing monomers such as (meth)acrylic acid, styrene sulfonic acid, vinyl phosphonic, maleic acid, fumaric acid, itaconic acid, 2-acrylamido 2-ethyl propanesulfonic acid and mono-2-(methacryloyloxy)ethyll succinate. Or aryl/alkyl esters thereof. Or carboxylic anhydride containing monomers such as maleic anhydride; zwitterionic monomers such as (meth)acryloyl oxyethylphosphoryl choline,
quaternised amino monomers such as methacryloyl-oxyethyltrimethyl ammonium chloride.

The corresponding allyl monomer, where applicable, can also be use in each case.

Hydrophobic monomers include: vinyl aryl compounds such as styrene and vinylbenzyl chloride; (meth)acrylic acid esters such as mono-t-butylaminoethyl (meth)acrylate, C1-20 alkyl(meth)acrylates (linear & branched), aryl(meth)acrylates, such as benzyl methacrylate; oligomeric (meth)acrylic acid esters such as mono(alk/aryl)oxyoligo[dimethylsiloxane (meth)acrylate] and tri(alkyloxy)silylalkyl(meth)acrylates such as trimethoxysilylpropyl(meth)acrylate.

Functional monomers, i.e. monomers with reactive pendant groups which can be post or pre-modified with another moiety can also be used such as glycidyl (meth)acrylate, trimethoxysilylpropyl(meth)acrylate, (meth)acryloyl chloride, maleic anhydride, hydroxyalkyl (meth)acrylates, (meth)acrylic acid, vinylbenzyl chloride, activated esters of (meth)acrylic acid such as N-hydroxysuccinamido (meth)acrylate and acetoxystyrene.

The copolymer may contain unreacted polymerisable groups from the multifunctional monomer.

Depending on how the organic polymer is produced, it may comprise end groups (for example -CH=CH₂) derived from chain initiation and chain termination. These are discussed in further detail below.

### The 'bridge'

A preferred multifunctional bridging species (b) comprises two or more polymerisable groups spaced apart by an organic or inorganic linker. This is a multifunctional monomer as opposed to the monofunctional monomer described above. The bridging species (c) and the inorganic groups (c) are closely related in that both are of the general form:

(monomer)-(link)_{q}-(monomer)ₘ

If m=0 then the structure forms a 'pier'. If m>0 then the structure forms a 'bridge'. If the link in a 'bridge' is inorganic then no piers need be present (i.e. the bridge (b) and the pier (c) are the same.

Where bridge species (b) is organic, it preferably takes the general 'vinyl-glycol-vinyl' form (II) shown below:

H_{2C}=C.(R¹)-C00-(L)ₙ0C-C.(R¹)=CH₂ (II)

Where groups R¹ are independently hydrogen or a substituent, preferably alk/aryl, and most preferably. In the most preferred form n=1 and L is -CH₂-CH₂-O-, therefore the bridging species is the di-ester of (meth)acrylic acid and ethylene glycol. The structure of the methacrylic acid di-ester is given as an illustrative example:

H₂C=C(CH₃)-CO-O-(CH₂-CH₂-0)-CO-C (CH₃)=CH₂

In those cases where the linker (L) is inorganic, it is most preferable that it comprises -Si(alkyl)₂- and n is large such that the mid-portion of the bridge comprises a PDMS oligomer. Overall, the bridge can be descibed as 'vinyl-poly(dimethyl siloxane]-vinyl' structure as illustrated by the example given above and repeated below:

H₂C=C(CH₃)-CO-O-L1-(Si(CH₃)₂-0-)ₙ-L2-CO-C(CH₃)=CH₂

Wherein the L1 and L2 groups will vary depending on the method of synthesis and may, for example, be silyl, alkyl (L1 is preferably propyl) or mixtures and combinations of the two (L2 is preferably -Si(CH₃)₂-(CH₂)ₙ- ).

The multifunctional monomer or brancher may comprise a molecule containing at least two vinyl groups that may be polymerised via addition polymerisation. The molecule may be hydrophilic, hydrophobic, amphiphilic, neutral, cationic, zwitterionic or oligomeric. Such molecules are often known as crosslinking agents in the art and may be prepared by reacting any di or multifunctional molecule with a suitably reactive monomer. Examples include di- or multivinyl esters, di- or multivinyl amides, di- or multivinyl aryl compounds and di- or multivinyl alk/aryl ethers. Typically, in the case of oligomeric or multifunctional branching agents, a linking reaction is used to attach a polymerisable moiety to a di- or multifunctional oligomer or a di- or multifunctional group. The brancher may itself have more than one branching point, such as 'T'-shaped divinylic oligomers. In some cases, more than one multifunctional monomer may be used.

Macrocrosslinkers or macrobranchers (multifunctional monomers having a molecular weight of at least 1000 Daltons) are generally formed by linking a polymerisable moiety, such as a vinyl or aryl group, to a pre-formed multifunctional polymer via a suitable linking unit such as an ester, an amide or an ether. Examples of suitable polymers include di-functional poly(alkylene oxides) such as poly(ethyleneglycol) or poly(propyleneglycol), silicones such as poly(dimethylsiloxane)s, polymers formed by ring-opening polymerisation such as poly(caprolactone) or poly(caprolactam) or poly-functional polymers formed via living polymerisation such as poly(1,4-butadiene).

Preferred macrobranchers include poly(ethyleneglycol) di(meth)acrylate, poly(propyleneglycol) di(meth)acrylate, (meth)acryloxypropyl-terminated poly(dimethylsiloxane), poly(caprolactone) di(meth)acrylate and poly(caprolactam) di(meth)acrylamide.

The corresponding allyl monomers to those listed above can also be used where appropriate.

Preferred multifunctional monomers include but are not limited to divinyl aryl monomers such as divinyl benzene; (meth)acrylate diesters such as glycerol di(meth)acrylate, ethylene glycol di(meth)acrylate, propyleneglycol di(meth)acrylate and 1,3-butylenedi(meth)acrylate; oligoalkylene oxide di(meth)acrylates such as tetraethyleneglycol di(meth)acrylate, oligo(ethyleneglycol) di(meth)acrylate and oligo(propyleneglycol) di(meth)acrylate; divinyl acrylamides such as methylene bisacrylamide; silicone-containing divinyl esters or amides such as (meth)acryloxypropyl-terminated oligo(dimethylsiloxane); divinyl ethers such as oligo(ethyleneglycol)divinyl ether; and tetra- or tri-(meth)acrylate esters such as pentaerythritol tetra(meth)acrylate, trimethylolpropane tri(meth)acrylate or glucose di- to penta(meth)acrylate. Further examples include vinyl or allyl esters, amides or ethers of pre-formed oligomers formed via ring-opening polymerisation such as oligo(caprolactam) or oligo(caprolactone), or oligomers formed via a living polymerisation technique such as oligo(1,4-butadiene).

### The 'pier'

The non-terminating inorganic polymer (c) is preferably a mono-functional species comprising a terminal vinyl 'head' group and a poly[dialkysiloxane] oligomer as the 'tail'. This takes the general form (III) shown below:

H₂C=C.(R¹)C(O)O-(CH₂)ⱼ-[-O-Si(alkyl)₂]ₙ-T (III)

Where R1 is hydrogen or a substituent, preferably alk/aryl, and most preferably methyl and T is a terminal group (typically -OH or -(CH₂)ⱼ-CH₃) which does not polymerise. -(CH₂)ⱼ- is a linking group which is determined by the method of synthesis.

As noted above a 'pier' group may be understood as a 'bridge' group with only one monofunctional terminal group. Thus what was written above as regards the possible components of the 'bridge' is also true of the 'pier'.

### The polymer

In the most general terms the polymer takes the form:

((monomer)ₘ)ₙ). (monomer (linker) monomer)ₚ. (monomer (pier)_{B} (IV)

Where m is large, n is >1, 'pier' is in this case comprises inorganic oligomer and, unless B > 0 at least some of 'linker' also comprises inorganic oligomer.

The copolymer preferably contains at least 1-50 mole% (based on the number of moles of monofunctional monomer) of a multifunctional monomer. In other words, p is 1-50% of m x n in formula (IV). Preferably this percentage is 1-40%, particularly 1-30% and especially 1-15%.

In the example shown in Figure 1, m is (in each case) large, n is 3 (see structures 'C'), p is 2 (see structures 'A' and 'B') and B is 5 (see structures 'P').

Especially preferred, branched copolymers of the present invention have the general formula (V) shown below:

[T-[**(m)acr**]ₘ-T']ₙ.[**(m)acr-**([L]_{G} [**SiO₂(alkyl)₂**]_{A})-**(m)acr**)]ₚ. [**(m)acr**-[L]_{G}-[**SiO2(alkyl)**₂]_{K}]_{B} (V)

Wherein:
- **(m)acr** is a mono-functional monomer residue or a mixture of residues, preferably a vinyl residue and more preferably a (meth)acrylate residue(s) or derivative(s) thereof,
- m is (independently) the number of residues in each poly[mono-functional monomer] chain, and can vary from chain to chain,
- T and T' are each independently an end-group which may be derived from a termination/initiation reaction,
- n is the number of poly[**(m)acr**] chains present in the branched polymer, n≥2, m»n,
- **[SiO₂(alkyl)₂]** is a siloxane repeat unit (present either in a 'bridge' or a 'pier'. 'Alkyl', is typically -CH₃ such that **[SiO₂(alkyl)₂]ₖ** is a PDMS oligomer,
- 'L' is a linking group or a mixture of the same (-CH₂- or, more preferably -O-CH₂-CH₂-),
- G can (independently) be zero if the link is not present,
- **[(m)acr-**([L]_{G}-**[SiO₂(alkyl)₂]_{A})-(m)acr)]** is a multi-functional (in this case bi-functional) 'bridge',
- p is the number of bridges present, preferably p ≥ (n-1) (typically p=(n-1)),
- A is (independently) the number of siloxane repeat units present in the or each bridge and can be zero,
- [**(m)acr-**[Link]_{G}-**[SiO₂(alkyl)₂]ₖ**] is a mono-functional 'pier', k being (independently) the number of siloxane repeat units in the pier
- B is the number of 'piers' present, A+B>0 as either siloxane containing piers or siloxane containing bridges are present, A+K>>0

### Synthesis of the Copolymers

The copolymer is prepared by an addition polymerisation method, which is a conventional free-radical polymerisation process. To produce a branched polymer by a conventional free-radical polymerisation process, a mono-functional monomer is polymerised with a multi-functional monomer (bridge/branching agent) in the presence of a chain transfer agent and free-radical initiator. The use of a separate chain transfer agent and an initiator is preferred. However, some molecules can perform both functions.

In formula (V) above T and T' each independently represent a terminal group derived from a termination reaction or an initiation reaction.

During conventional radical polymerisation, some inherent and unavoidable termination reactions occur. Common termination reactions between free-radicals are typically bimolecular combination and disproportionation reactions which vary depending on the monomer structure and result in the annihilation of two radicals. Disproportionation reactions are thought to be the most common, especially for the polymerisation of (meth)acrylates, and involve two dead primary chains, one with a hydrogen terminus (T or T' = H) and the other with a carbon-carbon double bond (T or T' = H, R, or CH₃). When the termination reaction is a chain transfer reaction, T or T' is typically an easily abstractable atom, commonly hydrogen. Thus, for instance, when the chain transfer agent is a thiol, T and/or T' can be a hydrogen atom.

The free-radical initiator can be any molecule known to initiate free-radical polymerisation such as azo-containing molecules, persulfates, redox initiators, peroxides, benzyl ketones. These initiator may be activated via thermal, photolytic or chemical means. Examples of these include but are not limited to 2,2'-azobisisobutyronitrile (AIBN), azobis(4-cyanovaleric acid), benzoyl peroxide, cumylperoxide, 1-hydroxycyclohexyl phenyl ketone, hydrogen peroxide/ascorbic acid. So-called 'iniferters' such as benzyl-N,N-diethyldithiocarbamate can also be used. In some cases, more than one initiator may be used.

Preferably, the residue of the initiator in a free-radical polymerisation comprises 0 to 5% w/w, preferably 0.01 to 5% w/w and especially 0.01 to 3% w/w, of the copolymer based on the total weight of the monomers.

The chain transfer agent is a molecule that is known to reduce molecular weight during a free-radical polymerisation via a chain transfer mechanism.

These agents are selected from C₂-C₁₈ alkyl thiols such as dodecane thiol, thioglycolic acid, thioglycerol, cysteine and cysteamine, thiol-containing oligomers such as oligo (cysteine) or an oligomer which has been post-functionalised to give a thiol group(s), such as oligoethylene glycolyl (di)thio glycollate.

The residue of the chain transfer agent (T or T' in formula (V)) comprises 0.05 to 50 mole%, preferably 0.05 to 40 mole% and especially 0.05 to 30 mole%, of the copolymer (based on the number of moles of mono-functional monomer).

The polymerisations may proceed via solution, bulk, suspension, dispersion and emulsion procedures. A particular advantage of the present invention is that, starting from the mono-functional monomer, the multi-functional 'bridge' species and (if required) the mono-functional 'pier' species the synthesis of the co-polymers may be performed as a 'one pot' reaction.

A typical reaction mixture comprises the following:
(a) at least one mono-functional monomer as previously defined;
(b) 1-50 mole% (based on the number of moles of mono-functional monomer) of a multi-functional monomer as previously defined;
(c) optionally, (where the multi-functional monomer is organic) an mono-functional organic oligomer;
(d) a chain transfer agent as previously defined; and
(e) an initiator, optionally but preferably a free-radical initiator as previously defined;

Some element of control over the products of this reaction can be gained by adding the 'pier' and 'bridge' forming species after the polymerisation of the organic chains has proceeded for some time.

### Compositions Comprising the Co-polymer:

The copolymer according to the first aspect of the present invention may be incorporated into compositions containing only a carrier or diluent (which may comprise solid and/or liquid) or also comprising an active ingredient.

The compound is typically included in said compositions at levels of from 0.01% to 50%, particularly from 0.01% to 25% by weight, preferably from 0.05% to 15%, more preferably from 0.1% to 10%, especially from 0.1% to 5% and most preferably from 0.2 % to 1.5%.

The copolymers of the invention may exhibit properties, such as viscosity reduction, increased deposition, increased particular/molecular dispersion, increased lubrication and increased solubility for a particular molecular weight when compared to a linear analogous polymer. The architecture of the polymers can also have an effect on the pKa of polyacids or bases. Thus, the copolymers of the invention may be used in a variety of applications. However, the copolymers of the invention are particularly suitable for use in laundry compositions, especially as anti-dye transfer agents.

The active ingredient in the compositions is preferably a surface active agent or a fabric conditioning agent. More than one active ingredient may be included. For some applications a mixture of active ingredients may be used.

The compositions of the invention may be in any physical form e.g. a solid such as a powder or granules, a tablet, a solid bar, a paste, gel or liquid, especially, an aqueous based liquid. In particular the compositions may be used in laundry compositions, especially in liquid, powder or tablet laundry compositions.

The compositions of the present invention are preferably laundry compositions, especially main wash (fabric washing) compositions or rinse-added softening compositions. The main wash compositions may include a fabric softening agent and rinse-added fabric softening compositions may include surface-active compounds, particularly non-ionic surface-active compounds, if appropriate.

The detergent compositions of the invention may contain a surface-active compound (surfactant) which may be chosen from soap and non-soap anionic, cationic, non-ionic, amphoteric and zwitterionic surface-active compounds and mixtures thereof. Many suitable surface-active compounds are available and are fully described in the literature, for example, in "Surface-Active Agents and Detergents", Volumes I and II, by Schwartz, Perry and Berch.

The preferred detergent-active compounds that can be used are soaps and synthetic non-soap anionic and non-ionic compounds. The total amount of surfactant present is suitably within the range of 5 to 60 wt%, preferably from 5 to 40 wt%.

The compositions of the invention may contain anionic surfactants. Examples include alkylbenzene sulfonates, such as linear alkylbenzene sulfonate, particularly linear alkylbenzene sulfonates having an alkyl chain length of C₈-C₁₅. It is preferred that the level of linear alkylbenzene sulfonate is from 0 wt% to 30 wt%, more preferably 1 wt% to 25 wt%, most preferably from 2 wt% to 15 wt%.

The compositions of the invention may contain other anionic surfactants in amounts additional to the percentages quoted above. Suitable anionic surfactants are well-known to those skilled in the art. Examples include primary and secondary alkyl sulfates, particularly C₈-C₂₀ primary alkyl sulfates; alkyl ether sulfates; olefin sulfonates; alkyl xylene sulfonates; dialkyl sulfosuccinates; and fatty acid ester sulfonates. Sodium salts are generally preferred.

The compositions of the invention may also contain non-ionic surfactant. Nonionic surfactants that may be used include the primary and secondary alcohol ethoxylates, especially the C₈-C₂₀ aliphatic alcohols ethoxylated with an average of from 1 to 20 moles of ethylene oxide per mole of alcohol, and more especially the C₁₀-C₁₅ primary and secondary aliphatic alcohols ethoxylated with an average of from 1 to 10 moles of ethylene oxide per mole of alcohol. Non-ethoxylated nonionic surfactants include alkylpolyglycosides, glycerol monoethers, and polyhydroxyamides (glucamide).

It is preferred that the level of non-ionic surfactant is from 0 wt% to 30 wt%, preferably from 1 wt% to 25 wt%, most preferably from 2 wt% to 15 wt%.

It is also possible to include certain mono-alkyl cationic surfactants which can be used in main-wash compositions for fabrics. Cationic surfactants that may be used include quaternary ammonium salts of the general formula R¹R²R³R⁴N⁺ X⁻ wherein the R groups are long or short hydrocarbon chains, typically alkyl, hydroxyalkyl or ethoxylated alkyl groups, and X is a counter-ion (for example, compounds in which R¹ is a C₈-C₂₂ alkyl group, preferably a C₈-C₁₀ or C₁₂-C₁₄ alkyl group, R² is a methyl group, and R³ and R⁴, which may be the same or different, are methyl or hydroxyethyl groups); and cationic esters (for example, choline esters).

Amphoteric and zwitterionic surfactants that may be used include alkyl amine oxides, betaines and sulfobetaines. In accordance with the present invention, the detergent surfactant (a) most preferably comprises an anionic sulfonate or sulfonate surfactant optionally in admixture with one or more cosurfactants selected from ethoxylated nonionic surfactants, non-ethoxylated nonionic surfactants, ethoxylated sulfate anionic surfactants, cationic surfactants, amine oxides, alkanolamides and combinations thereof.

The choice of surface-active compound (surfactant), and the amount present, will depend on the intended use of the detergent composition. In fabric washing compositions, different surfactant systems may be chosen, as is well known to the skilled formulator, for handwashing products and for products intended for use in different types of washing machine.

The total amount of surfactant present will also depend on the intended end use and may be as high as 60 wt%, for example, in a composition for washing fabrics by hand. In compositions for machine washing of fabrics, an amount of from 5 to 40 wt% is generally appropriate. Typically the compositions will comprise at least 2 wt% surfactant e.g. 2-60%, preferably 15-40% most preferably 25-35%.

Detergent compositions suitable for use in most automatic fabric washing machines generally contain anionic non-soap surfactant, or non-ionic surfactant, or combinations of the two in any suitable ratio, optionally together with soap.

Any conventional fabric conditioning agent may be used in the compositions of the present invention. The conditioning agents may be cationic or non-ionic. If the fabric conditioning compound is to be employed in a main wash detergent composition the compound will typically be non-ionic. For use in the rinse phase, typically they will be cationic. They may for example be used in amounts from 0.5% to 35%, preferably from 1% to 30% more preferably from 3% to 25% by weight of the composition.

Preferably the fabric conditioning agent(s) have two long chain alkyl or alkenyl chains each having an average chain length greater than or equal to C16. Most preferably at least 50% of the long chain alkyl or alkenyl groups have a chain length of C18 or above. It is preferred that the long chain alkyl or alkenyl groups of the fabric conditioning agents are predominantly linear.

The fabric conditioning agents are preferably compounds that provide excellent softening, and are characterised by a chain melting Lβ to Lα transition temperature greater than 250°C, preferably greater than 350°C, most preferably greater than 450°C. This Lβ to Lα transition can be measured by DSC as defined in "Handbook of Lipid Bilayers, D Marsh, CRC Press, Boca Raton, Florida, 1990 (pages 137 and 337).

Substantially insoluble fabric conditioning compounds in the context of this invention are defined as fabric conditioning compounds having a solubility less than 1x10⁻³ wt% in deminerailised water at 20°C. Preferably the fabric softening compounds have a solubility less than 1x10⁻⁴ wt%, most preferably less than 1x10⁻⁸ to 1x10⁻⁶. Preferred cationic fabric softening agents comprise a substantially water insoluble quaternary ammonium material comprising a single alkyl or alkenyl long chain having an average chain length greater than or equal to C₂₀ or, more preferably, a compound comprising a polar head group and two alkyl or alkenyl chains having an average chain length greater than or equal to C₁₄.

Preferably, the cationic fabric softening agent is a quaternary ammonium material or a quaternary ammonium material containing at least one ester group. The quaternary ammonium compounds containing at least one ester group are referred to herein as ester-linked quaternary ammonium compounds.

As used in the context of the quarternary ammonium cationic fabric softening agents, the term 'ester group', includes an ester group which is a linking group in the molecule.

It is preferred for the ester-linked quaternary ammonium compounds to contain two or more ester groups. In both monoester and the diester quaternary ammonium compounds it is preferred if the ester group(s) is a linking group between the nitrogen atom and an alkyl group. The ester groups(s) are preferably attached to the nitrogen atom via another hydrocarbyl group.

Also preferred are quaternary ammonium compounds containing at least one ester group, preferably two, wherein at least one higher molecular weight group containing at least one ester group and two or three lower molecular weight groups are linked to a common nitrogen atom to produce a cation and wherein the electrically balancing anion is a halide, acetate or lower alkosulphate ion, such as chloride or methosulphate. The higher molecular weight substituent on the nitrogen is preferably a higher alkyl group, containing 12 to 28, preferably 12 to 22, e.g. 12 to 20 carbon atoms, such as coco-alkyl, tallowalkyl, hydrogenated tallowalkyl or substituted higher alkyl, and the lower molecular weight substituents are preferably lower alkyl of 1 to 4 carbon atoms, such as methyl or ethyl, or substituted lower alkyl. One or more of the said lower molecular weight substituents may include an aryl moiety or may be replaced by an aryl, such as benzyl, phenyl or other suitable substituents.

Preferably the quaternary ammonium material is a compound having two C₁₂-C₂₂ alkyl or alkenyl groups connected to a quaternary ammonium head group via at least one ester link, preferably two ester links or a compound comprising a single long chain with an average chain length equal to or greater than C₂₀.

More preferably, the quaternary ammonium material comprises a compound having two long chain alkyl or alkenyl chains with an average chain length equal to or greater than C₁₄. Even more preferably each chain has an average chain length equal to or greater than C₁₆. Most preferably at least 50% of each long chain alkyl or alkenyl group has a chain length of C₁₈. It is preferred if the long chain alkyl or alkenyl groups are predominantly linear.

The optionally ester-linked quaternary ammonium material may contain optional additional components, as known in the art, in particular, low molecular weight solvents, for instance isopropanol and/or ethanol, and co-actives such as nonionic softeners, for example fatty acid or sorbitan esters.

The compositions of the invention, when used as main wash fabric washing compositions, will generally also contain one or more detergency builder. The total amount of detergency builder in the compositions will typically range from 0 to 80 wt%, preferably from 0 to 60 wt%.

Inorganic builders that may be present include sodium carbonate, if desired in combination with a crystallisation seed for calcium carbonate, as disclosed in GB1437950 (Unilever); crystalline and amorphous aluminosilicates, for example, zeolites as disclosed in GB1473201 (Henkel), amorphous aluminosilicates as disclosed in GB1473202 (Henkel) and mixed crystalline/amorphous aluminosilicates as disclosed in GB1470250 (Procter & Gamble); and layered silicates as disclosed in EP164514B (Hoechst). Inorganic phosphate builders, for example, sodium orthophosphate, pyrophosphate and tripolyphosphate are also suitable for use with this invention.

The compositions of the invention preferably contain an alkali metal, preferably sodium, aluminosilicate builder. Sodium aluminosilicates may generally be incorporated in amounts of from 5 to 60% by weight (anhydrous basis), preferably from 10 to 50 wt%, especially from 25 to 50 wt%.

The alkali metal aluminosilicate may be either crystalline or amorphous or mixtures thereof, having the general formula: 0.8-1.5 Na₂O. Al₂O₃. 0.8-6 SiO₂.

These materials contain some bound water and are required to have a calcium ion exchange capacity of at least 50 mg CaO/g. The preferred sodium aluminosilicates contain 1.5-3.5 SiO₂ units (in the formula above). Both the amorphous and the crystalline materials can be prepared readily by reaction between sodium silicate and sodium aluminate, as amply described in the literature. Suitable crystalline sodium aluminosilicate ion-exchange detergency builders are described, for example, in GB1429143 (Procter & Gamble). The preferred sodium aluminosilicates of this type are the well-known commercially available zeolites A and X, and mixtures thereof.

The zeolite may be the commercially available zeolite 4A now widely used in laundry detergent powders. In an alternative embodiment of the invention, the zeolite builder incorporated in the compositions of the invention is maximum aluminium zeolite P (zeolite MAP) as described and claimed in EP384070A (Unilever). Zeolite MAP is defined as an alkali metal aluminosilicate of the zeolite P type having a silicon to aluminium ratio not exceeding 1.33, preferably within the range of from 0.90 to 1.33, and more preferably within the range of from 0.90 to 1.20.

In the case of zeolite MAP, zeolite MAP having a silicon to aluminium ratio not exceeding 1.07, more preferably about 1.00, is especially preferred. The calcium binding capacity of zeolite MAP is generally at least 150 mg CaO per g of anhydrous material.

The zeolites may be supplemented by other inorganic builders, for example, amorphous aluminosilicates, or layered silicates such as SKS-6 ex Clariant.

The zeolite may be supplemented by organic builders. Organic builders that may be present include polycarboxylate polymers such as polyacrylates, acrylic/maleic copolymers, and acrylic phosphinates; monomeric polycarboxylates such as citrates, gluconates, oxydisuccinates, glycerol mono-, di and trisuccinates, carboxymethyloxy succinates, carboxymethyloxymalonates, dipicolinates, hydroxyethyl iminodiacetates, alkyl- and alkenylmalonates and succinates; and sulfonated fatty acid salts. This list is not intended to be exhaustive.

Especially preferred organic builders are citrates, suitably used in amounts of from 1 to 30 wt%, preferably from 5 to 30 wt%, more preferably from 10 to 25 wt%; and acrylic polymers, more especially acrylic/maleic copolymers, suitably used in amounts of from 0.5 to 15 wt%, preferably from 1 to 10 wt%.

Builders, both inorganic and organic, are preferably present in alkali metal salt, especially sodium salt, form.

Builders are suitably present in total amounts of from 10 to 80 wt%, more preferably from 20 to 60 wt%. Builders may be inorganic or organic.

A built composition in accordance with the invention may most preferably comprise from 10 to 80 wt% of a detergency builder (b) selected from zeolites, phosphates, and citrates.

The laundry detergent composition will generally comprises other detergent ingredients well known in the art. These may suitably be selected from bleach ingredients, enzymes, sodium carbonate, sodium silicate, sodium sulphate, foam controllers, foam boosters, perfumes, fabric conditioners, soil release polymers, dye transfer inhibitors, photobleaches, fluorescers and coloured speckles.

Compositions according to the invention may also suitably contain a bleach system. Fabric washing compositions may desirably contain peroxy bleach compounds, for example, inorganic persalts or organic peroxyacids, capable of yielding hydrogen peroxide in aqueous solution.

Suitable peroxy bleach compounds include organic peroxides such as urea peroxide, and inorganic persalts such as the alkali metal perborates, percarbonates, perphosphates, persilicates and persulfates. Preferred inorganic persalts are sodium perborate monohydrate and tetrahydrate, and sodium percarbonate.

Especially preferred is sodium percarbonate having a protective coating against destabilisation by moisture. Sodium percarbonate having a protective coating comprising sodium metaborate and sodium silicate is disclosed in GB2123044B (Kao).

The peroxy bleach compound is suitably present in an amount of from 0.1 to 35 wt%, preferably from 0.5 to 25 wt%. The peroxy bleach compound may be used in conjunction with a bleach activator (bleach precursor) to improve bleaching action at low wash temperatures. The bleach precursor is suitably present in an amount of from 0.1 to 8 wt%, preferably from 0.5 to 5 wt%.

Preferred bleach precursors are peroxycarboxylic acid precursors, more especially peracetic acid precursors and pernonanoic acid precursors. Especially preferred bleach precursors suitable for use in the present invention are N,N,N',N',-tetracetyl ethylenediamine (TAED) and sodium nonanoyloxybenzene sulphonate (SNOBS). The novel quaternary ammonium and phosphonium bleach precursors disclosed in US4751015 and US4818426 (Lever Brothers Company) and EP402971A (Unilever), and the cationic bleach precursors disclosed in EP284292A and EP303520A (Kao) are also of interest.

The bleach system can be either supplemented with or replaced by a peroxyacid. examples of such peracids can be found in US 4686063 and US5397501 (Unilever). A preferred example is the imido peroxycarboxylic class of peracids described in EP325288A, EP349940A, DE3823172 and EP325289. A particularly preferred example is phthalimido peroxy caproic acid (PAP). Such peracids are suitably present at 0.1 - 12%, preferably 0.5 - 10%.

A bleach stabiliser (transition metal sequestrant) may also be present. Suitable bleach stabilisers include ethylenediamine tetra-acetate (EDTA), diethylenetriamine pentaacetate (DTPA), the polyphosphonates such as Dequest (Trade Mark), ethylenediamine tetramethylene phosphonate (EDTMP) and diethylenetriamine pentamethylene phosphate (DETPMP) and non-phosphate stabilisers such as EDDS (ethylene diamine disuccinate). These bleach stabilisers are also useful for stain removal especially in products containing low levels of bleaching species or no bleaching species.

An especially preferred bleach system comprises a peroxy bleach compound (preferably sodium percarbonate optionally together with a bleach activator), and a transition metal bleach catalyst as described and claimed in EP458397A, EP458398A and EP509787A (Unilever).

The compositions according to the invention may also contain one or more enzyme(s).
Suitable enzymes include the proteases, amylases, cellulases, oxidases, peroxidases and lipases usable for incorporation in detergent compositions. Preferred proteolytic enzymes (proteases) are, catalytically active protein materials which degrade or alter protein types of stains when present as in fabric stains in a hydrolysis reaction. They may be of any suitable origin, such as vegetable, animal, bacterial or yeast origin.

Proteolytic enzymes or proteases of various qualities and origins and having activity in various pH ranges of from 4-12 are available and can be used in the instant invention. Examples of suitable proteolytic enzymes are the subtilins which are obtained from particular strains of *B. Subtilis B. licheniformis,* such as the commercially available subtilisins Maxatase (Trade Mark), as supplied by Gist Brocades N.V., Delft, Holland, and Alcalase (Trade Mark), as supplied by Novo Industri A/S, Copenhagen, Denmark.

Particularly suitable is a protease obtained from a strain of Bacillus having maximum activity throughout the pH range of 8-12, being commercially available, e.g. from Novo Industri A/S under the registered trade-names Esperase (Trade Mark) and Savinase (Trade-Mark). The preparation of these and analogous enzymes is described in GB1243785. Other commercial proteases are Kazusase (Trade Mark obtainable from Showa-Denko of Japan), Optimase (Trade Mark from Miles Kali-Chemie, Hannover, West Germany), and Superase (Trade Mark obtainable from Pfizer of U.S.A.).

Detergency enzymes are commonly employed in granular form in amounts of from about 0.1 to about 3.0 wt%. However, any suitable physical form of enzyme may be used.

The compositions of the invention may contain alkali metal, preferably sodium, carbonate, in order to increase detergency and ease processing. Sodium carbonate may suitably be present in amounts ranging from 1 to 60 wt%, preferably from 2 to 40 wt%. However, compositions containing little or no sodium carbonate are also within the scope of the invention.

Powder flow may be improved by the incorporation of a small amount of a powder structurant, for example, a fatty acid (or fatty acid soap), a sugar, an acrylate or acrylate/maleate copolymer, or sodium silicate. One preferred powder structurant is fatty acid soap, suitably present in an amount of from 1 to 5 wt%. The amount of sodium silicate may suitably range from 0.1 to 5 wt%.

Other materials that may be present in detergent compositions of the invention include sodium silicate; antiredeposition agents such as cellulosic polymers; soil release polymers; inorganic salts such as sodium sulfate; lather control agents or lather boosters as appropriate; proteolytic and lipolytic enzymes; dyes; coloured speckles; perfumes; foam controllers; fluorescers and decoupling polymers. This list is not intended to be exhaustive.

The detergent composition when diluted in the wash liquor (during a typical wash cycle) will typically give a pH of the wash liquor from 7 to 10.5 for a main wash detergent.

Particulate detergent compositions are suitably prepared by spray-drying a slurry of compatible heat-insensitive ingredients, and then spraying on or post-dosing those ingredients unsuitable for processing via the slurry. The skilled detergent formulator will have no difficulty in deciding which ingredients should be included in the slurry and which should not.

Particulate detergent compositions of the invention preferably have a bulk density of at least 400 g/litre, more preferably at least 500 g/litre. Especially preferred compositions have bulk densities of at least 650 g/litre, more preferably at least 700 g/litre.

Such powders may be prepared either by post-tower densification of spray-dried powder, or by wholly non-tower methods such as dry mixing and granulation; in both cases a high-speed mixer/granulator may advantageously be used. Processes using high-speed mixer/granulators are disclosed, for example, in EP340013A, EP367339A, EP390251A and EP420317A (Unilever).

Liquid detergent compositions can be prepared by admixing the essential and optional ingredients thereof in any desired order to provide compositions containing components in the requisite concentrations. Liquid compositions according to the present invention can also be in compact form which means it will contain a lower level of water compared to a conventional liquid detergent.

The present invention will now be explained in more detail by reference to the following non-limiting examples:-

### Examples

### Nomenclature

In the examples the following abbreviations are used:
MMA: the mono-functional monomer methyl methacrylate;
PDMS/PDMSDMA: The bi-functional inorganic 'bridge' comprising poly[dimethyl siloxane] with methyl methacryate terminal groups (polydimethyl siloxane dimethacrylate);
EGDMA: the bi-functional organic 'bridge' comprising ethylene glycol with methyl methacryate terminal groups (ethylene glycol di-methacrylate);
PDMSMA: The mono-functional inorganic 'pier' comprising poly[dimethyl siloxane] with a single methyl methacryate terminal group (polydimethyl siloxane monomethacrylate); DDT: dodecanethiol (a chain transfer agent).

In many of the examples below, samples have been recorded according to the nomenclature described below:
Monomer mole ratio (Normalised to 100) bridge Mw bridge in Kilo Daltons)/bridge mole ratio/Chain transfer agent mole ratio

*Example :* MMA/PDMS 1 K/DDT in proportion of mole ratios of 100 MMA, 15 PDMSDMA and 10 DDT will give :
**mma pdms 11510**

### Synthesis Examples

Synthesis examples are presented in table 1a and 1b below.

The polymerizations have been performed at 20% solids except when it is advised. Methyl methacrylate (MMA), polydimethylsiloxane (PDMS DMA), dodecanethiol (DDT) and AIBN were dissolved in toluene in a round-bottomed flask. All products were used as supplied except the MMA which has been purified through a silica column and the AIBN which has been recrystallised.

Similar reaction were performed as above (see table 1b), replacing the brancher PDMS DMA by the ethylene glycol dimethacrylate (EG DMA).

Dioxygen is an inhibitor of the reaction and must be removed. It is especially contained in silicones. Consequently, the solution was degassed by freezing the flask under vacuum in a bath of liquid nitrogen. This operation was carried out three times. Then, the flask was sealed and heated to 85°C in a oil bath during 24h. (except when it is advised).

The methanol has been used as a non-solvent to isolate the polymer by precipitation. The precipitate was collected and dried in a vacuum oven at a temperature of 40°C.

Size Exclusion Chromatography (GPC) was performed in THF using a free detector DAWN DSP instrument. 25 mg of polymers were dissolved in 5 ml of solvent and left overnight to ensure a good dissolution.

Rheology was examined to determine the elastic (G') and viscous (G") modulus of the polymers.

Measurements were made with a Bolhin CVO 120 rheometer using dynamic measurement (also called oscillatory measurement as the samples are subjected to oscillatory shear).

The tests were done under control stress in frequency sweep. In order to determine the appropriate value of stress, a first test in amplitude sweep was made to determine the linear zone of viscoelasticity. By studying The modulus G' (Pa) versus the stress (Pa), a plateau and a decrease could be observed. A value of G' was taken at a decrease of 5% and the correspondent stress value. Note that for this first measurement, the frequency was set at 1Hz.

The stress value kept for the oscillatory measurement was half this value determine before. The frequency range was between 0.01 Hz and 100Hz. The elastic modulus G' and viscous modulus G" against the frequency were plot.

The tests were carried out at different temperatures because the samples were thermosensitive. In our case, three temperatures has been chosen : 0°C , 25°C and 50°C.

Then, the results obtained were normalised at 25°C. We can chose different types of geometry. It exists two sorts of geometry for this Bolhin apparatus : Plate or Cone with variable dimensions (diameter, angle...). The geometry plate-plate was the most appropriate for our polymers.

Results are shown in table 4.

### Properties Examples

¹H NMR spectrocopic analysis, GPC analysis and rheology analysis were carried out to analyse the structure and properties of the branched polymers. NMR results are presented in table 2a and 2b.

**Table 1a: Synthesis examples for monomer Methylmethacrylate (MMA)**

| Samples type MMA/PDMSDMA/DDT | | | | | | | |
|---|---|---|---|---|---|---|---|
| **Brancher** | **Chain Transfer Agent** | **Time of polymerizati on** | **Aspect** | **Yield (%)** | **¹H NMR** | **GPC** | **Rheology** |
| **Polydimethylsiloxane dimethacrylate PDMS DMA 1k** %molar of monomer | **Dodecanethiol (DDT)** %molar of monomer | | | | | | |
| 15% | 15% | 24h | brittle solid | 51 | 05or 1302 | GB1 | no |
| 15% | 10% | 24h and 72h | hard solid | 51 | 05or 1303 | GB2 | no |
| 15% | 8% | 24h | brittle solid | 29 | 05or 1336 | GB3 | no |
| 15% | 5% | 24h | Low Mw | | 05or 1338 | | no |
| 10% | 10% | 24h | hard solid | 46 | 05or 1316 | GB4 | no |
| 10% | 8% | 24h | hard solid | 9.5 | 05or 1318 | GB5 | no |

| **PDMS DMA 5K** | **DDT** | **Time** | **Aspect** | **Yield** | **¹H NMR** | **GPC** | **Rheology** |
|---|---|---|---|---|---|---|---|
| 15% | 15% | 24h | Stringy, soft | 59 | 05or 1402 | GB6 | mma pdms 51515 |
| 15% | 10% | 24h | Very Stringy thick | 66 | 050r1363 | GB7 | mmm pdms 51510 |
| 15% | 8% | 24h | Stringy soft | 50 | 05or 1364 | GB8 | mmma pdms 51508 |
| 10% | 10% | 24h | Sightly stringy | 56 | 05or 1428 | GB9 | mma pdms 51010 |

| **PDMS DMA 10k** | **DDT** | **Time** | **Aspect** | **Yield** | **¹H NMR** | **GPC** | **Rheology** |
|---|---|---|---|---|---|---|---|
| 15% | 15% | 24h | Thick liquid | 60 | 05or 1403 | GB10 | mma pdms 101515 |
| 15% | 10% | 24h | Thick liquid | 48 | 05or 1404 | GB11 | mma pdms 101510 |
| 15% | 8% | 24h | Stringy | 45 | 05or 1405 | GB12 | mma pdms 101508 |
| 10% | 10% | 24h | Soft solid, like a gel | 71 | 05or 1413 | GB13 | mma pdms 101010 |
| 10% | 8% | 24h | Soft solid, like a gel | 63 | 05or 1408 | GB14 | mma pdms 101008 |

**Table 1b: synthesis examples**

| Samples type MMA/PDMS MA1k/ /EGDMA/DDT | | | | | | | |
|---|---|---|---|---|---|---|---|
| **MMA % molar** | **Polydimethyl siloxane monomethacrylate PDMS MA 1k % molar of MMA** | **(EGDMA) %molar of total monomers** | **DDT** | **Time polymerization** | **Aspect** | **Yield (%)** | **¹H NMR** |
| 50 | 50 | 15 | 15 | 72h | viscous liquid | 28 | 05or1482 |
| 50 | 50 | 15 | 15 | 24h | | 27 | 05or1483 |
| 50 | 50 | 15 | 10 | 24h | | 22 | 05or1498 |
| **MMA** | **PDMS MA1k** | **EGDMA** | **DDT** | **Time** | **Aspect** | **Yield (%)** | **¹H NMR** |
| 50%wt | 50%wt | 15 %mol | 15 %mol | 24h | white solid | 32 | |
| **MMA** | **PDMS MA 5k** | **EGDMA** | **DDT** | **Time** | **Aspect** | **Yield (%)** | **¹H NMR** |
| 50 | 50 | 15 | 15 | 24h | liquid | 48 | |

**Table 2a: NMR Results**

| Samples type MMA/PDMSDMA/DDT | | | | | | | | | | |
|---|---|---|---|---|---|---|---|---|---|---|
| Sample name* | Sample number | Mw PDMS | Feed %PDMS theoretical/real | %PDMS in polymer | Ratio CH₃Si/ CH₃O | Ratio CH₃Si/ CH₃O theory | Ratio MeSi/CH₂Si real | Ratio MeSi/CH₂Si theory | Remaining vinylic groups %mol | Yield of polymerization (%) |
| **1 15 15** | 05or1302 | 657 | 15/23 | 26.2 | 3 | 2.6 | 7 | 8 | 2.8 | 51 |
| **1 15 10** | 05or1303 | | 15/23 | 26.2 | 3 | | 8 | | 3.2 | 51 |
| **1 15 8** | 05or1336 | | 15/23 | 55.3 | 6.2 | | 8.8 | | 50 | 29 |
| **1 10 10** | 05or1316 | | 10/15 | 17.8 | 2 | 1.7 | 8.1 | | 1 | 46 |
| **1 10 8** | 05or1318 | | 10/15 | 22.3 | 2.5 | | 8.3 | | 7 | 9.5 |
| **5 15 15** | 05or1402 | 5153 | 15/15 | 21.87 | 28 | 20 | 131 | 80 | 6.5 | 59 |
| **5 15 10** | 05or1363 | | 15/15 | 21.87 | 28 | | 104 | | 18.4 | 66 |
| **5 15 8** | 05or1364 | | 15/15 | 24.0 | 32 | | 114 | | 17.8 | 50 |
| **5 10 10** | 05or1428 | | 10/10 | 17.29 | 23 | 13.3 | 127 | | 21 | 56 |
| **10 15 15** | 05or1403 | 9520 | 15/16 | 24 | 60 | 40 | 182 | 116 | 90 | 60 |
| **10 15 10** | 05or1404 | | 15/16 | 24 | 60 | | 178 | | 24 | 48 |
| **10 15 8** | 05or1405 | | 15/16 | 19.2 | 48 | | 163 | | 87 | 45 |
| **10 10 10** | 05or1413 | | 10/11 | 24.5 | 58 | 26 | 139 | | 27 | 71 |
| **10 10 8** | 05or1408 | | 10/11 | 9.7 | 23 | | 127 | | 16.5 | 63 |

**Table 2b: NMR Results.**

| Samples type MMA/PDMS MA1k/ /EGDMA/DDT | | | | | | | | | | | | |
|---|---|---|---|---|---|---|---|---|---|---|---|---|
| Sample name* | Sample number | M_{W} PDMS | % PDMS theoretical | %PDMS real | % theoretical EGDMA | % real EGDMA | Ratio CH₃Si/ CH₃O | Ratio CH₃Si/ CH₃O theoretic al | Ratio MeSi/ CH₂Si real | Ratio MeSi/CH2 Si theoretical | Reminding vinylic groups %mol | Yield of polymerization (%) |
| **15-15 72h** | **05or 1496** | 538 g/ mol | 50 | 52.5 | 15 | 4 | 21.4 | 20 | 15.7 | 15 | 15% | 28 |
| **15-15 24h** | **05or 1497** | | 50 | 47 | | 5 | 26.6 | | 16.9 | | 15% | 27 |
| **15-10 24h** | **05or 1498** | | 50 | 50 | | 0.4 | 21.0 | | 14.8 | | 6% | 22 |

**Table 3: Size exclusion chromatography (GPC)**

| Samples type MMA/PDMSDMA/DDT | | | | | | |
|---|---|---|---|---|---|---|
| | **% Brancher PDMS DMA** | **% Transfer agent DDT** | **PDMS Mw (*1000)** | **Mn** | **Mw** | **Mz** |
| **GB 1** | 15 | 15 | 1 | 2.352E+05 | 3.483E+06 | 8.727E+06 |
| **GB 2** | 15 | 10 | 1 | 2.556E+04 | 2.686E+04 | 2.810E+04 |
| **GB 3** | 15 | 8 | 1 | 3.449E+04 | 3.971 E+04 | 4.510E+04 |
| **GB 4** | 10 | 10 | 1 | 4.678E+04 | 6.840E+04 | 9.248E+04 |
| **GB 5** | 10 | 8 | 1 | 7.837E+03 | 1.065E+04 | 1.331 E+04 |
| **GB 6** | 15 | 15 | 5 | 1.753E+04 | 7.559E+04 | 1.921 E+05 |
| **GB 7** | 15 | 10 | 5 | 3.151 E+04 | 2.140E+05 | 6.430E+05 |
| **GB 8** | 15 | 8 | 5 | 1.696E+04 | 4.774E+04 | 9.447E+04 |
| **GB 10*** | 15 | 15 | 10 | 8.98E+03 | 1.02E+04 | 1.14E+04 |
| **GB 11*** | 15 | 10 | 10 | 1.70E+04 | 4.77E+04 | 9.45E+04 |

| | | | | | | |
|---|---|---|---|---|---|---|
| * Silicones are not well detected in THF. The more the polymer contained PDMS DMA, the more the response will be inaccurate. Consequently, the results obtained for the samples containing some PDMS DMA 10k were not accurate. The curves translate the noises of the instrument. More satisfying results should be obtained with a dissolution of the polymers in toluene instead of a dissolution in THF. | | | | | | |

**Table 4: Rheological properties.**

| **Sample reference** | **Sample aspect** | **Elastic Modulus G' at 0.01Hz (Pa)** | **Viscous Modulus G''at 0.01Hz (Pa)** | **Elastic Modulus G' at 100Hz (Pa)** | **Viscous Modulus G" at 100Hz (Pa)** | **Max modulus at relaxation time** | **Relaxation time/s** | **Relaxation time (Hz)** |
|---|---|---|---|---|---|---|---|---|
| mma pdms 51515 | Stringy, soft | 0.0034 | 2.048 | | | 1000 | 0.004 | 266 |
| mmm pdms 51510 | Very Stringy thick | 1.456 | 37.580 | 10000 | 5435 | 3300 | 0.200 | 5 |
| mmma pdms 51508 | Stringy soft | 0.03511 | 7.094 | 4134 | 2553 | 1200 | 0.042 | 24 |
| mma pdms 51010 | Slightly stringy | 0.1572 | 22.46 | 9761 | 5878 | 3000 | 0.050 | 20 |
| mma pdms 101515 | Thick liquid | 0.0001545 | 0.1213 | 34300 | 22700 | 400 | 0.031 | 32 |
| mma pdms 101510 | Thick liquid | 0.0004795 | 0.483 | 735.1 | 1290 | 1400 | 0.003 | 300 |
| mma pdms 101508 | Stringy | 0.02118 | 4.28 | 2217 | 1577 | 600 | 0.066 | 15.08 |
| mma pdms 101010 | Soft solid, like a gel | 22.9 | 96.29 | 4734 | 1437 | 600 | 3.125 | 0.32 |
| mma pdms 101008 | Soft solid, like a gel | 242.4 | 434.3 | 13200 | 3406 | 1500 | 3.125 | 0.32 |

## Claims

1. A branched, hybrid polymer obtainable by an addition polymerisation process, comprising organic chains and inorganic chains wherein:
(a) said polymer comprises at least two organic chains which are covalently linked by a bridge other than at their ends, wherein the polymer contains 1-50 mole % of multifunctional monomer based on the number of moles of monofunctional monomer;
(b) at least one inorganic chain is present, either as a covalently-bonded pendant group on an organic chain or within the bridge, and
(c) the polymer comprises a residue of a chain transfer agent and a residue of an initiator wherein the residue of the chain transfer agent comprises 0.05 to 50 mole % of the copolymer, based on the number of moles of mono-functional monomer and wherein the chain transfer agent is selected from the group consisting of : C₂-C₁₈ alkyl thiols, such as dodecane thiol, thioglycolic acid, thioglycerol, cysteine, and cysteamine and thiol-containing oligomers, such as oligo (cysteine) or an oligomer which has been post-functionalised to give a thiol group, such as oligoethylene glycolyl (di) thioglycollate.

2. A polymer according to claim 1 wherein the inorganic chain comprises a poly [dialkyl siloxane] oligomer.

3. A polymer according to claim 2 wherein poly [dialkyl siloxane] oligomer chains are present as 'piers', which are attached to one (or more) of the linked organic chains.

4. A polymer according to claim 2 wherein the bridge is organic in nature.

5. A polymer according to claim 2 wherein poly [dialkyl siloxane] oligomer chains comprise part of the bridge between the organic chains.

6. A method of synthesising hybrid organic/inorganic polymers according to any preceding claim by an addition polymerisation process, which comprises reacting:
(a) an organic mono-functional monomer,
(b) an organic multi-functional non-terminating bridging species having terminal groups which are each co-polymerisable with (a), and/ or
(c) an inorganic multifunctional or monofunctional species having terminal group(s) which are copolymerisable with (a).

7. A method according to claim 6 wherein the at least one mono-functional monomer comprises a (meth) acrylic acid or a derivative thereof.

8. A method according to claim 6 wherein the multifunctional monomer is selected from an alkyl or poly [dialkyl siloxane] chain terminated at each end with a vinyl-containing end group.

9. A method according to claim 7 wherein:
(a) the multi-functional monomer is alkyl chain terminated at each end with a vinyl-containing end group, and,
(b) the mono-functional inorganic oligomer is present and comprises a vinyl-tipped poly [dialkyl siloxane].

## Patentansprüche

1. Verzweigtes Hybridpolymer, das durch ein Additionspolymerisationsverfahren erhältlich ist, umfassend organische Ketten und anorganische Ketten, wobei:
(a) das Polymer mindestens zwei organische Ketten umfasst, die kovalent durch eine Brücke anderswo als an ihren Enden verknüpft sind, wobei das Polymer 1―50 Mol-% multifunktionelles Monomer, auf die Anzahl von Molen von monofunktionellem Monomer bezogen, enthält;
(b) mindestens eine anorganische Kette entweder als kovalent gebundene Seitengruppe an einer organischen Kette oder innerhalb der Brücke vorliegt und
(c) das Polymer einen Rest eines Kettenübertragungsmittels und einen Rest eines Initiators umfasst, wobei der Rest des Kettenübertragungsmittels 0,05 bis 50 Mol-% des Copolymers, auf die Anzahl von Molen von monofunktionellem Monomer bezogen, umfasst und wobei das Kettenübertragungsmittel aus der Gruppe ausgewählt ist bestehend aus: C₂-C₁₈-Alkylthiolen wie beispielsweise Dodecanthiol, Thioglykolsäure, Thioglycerin, Cystein und Cysteamin und thiolhaltigen Oligomeren wie beispielsweise Oligo(cystein) oder einem Oligomer, das postfunktionalisiert worden ist, um eine Thiolgruppe wie beispielsweise Oligoethylenglykol(di)thioglykolat zu ergeben.

2. Polymer nach Anspruch 1, wobei die anorganische Kette ein Poly[dialkylsiloxan]oligomer umfasst.

3. Polymer nach Anspruch 2, wobei Poly[dialkylsiloxan]oligomerketten als "Anlegestellen" vorliegen, die an eine (oder mehrere) der verknüpften organischen Ketten angeheftet sind.

4. Polymer nach Anspruch 2, wobei die Brücke organischer Natur ist.

5. Polymer nach Anspruch 2, wobei die Poly[dialkylsiloxan]oligomerketten Teile der Brücke zwischen den organischen Ketten umfassen.

6. Verfahren zum Synthetisieren von organischen/anorganischen Hybridpolymeren nach einem der vorhergehenden Ansprüche durch ein Additionspolymerisationsverfahren, das das Reagieren umfasst:
(a) eines organischen monofunktionellen Monomers,
(b) einer organischen multifunktionellen nichtterminierenden Brückenspezies, die endständige Gruppen aufweist, die jeweils mit (a) copolymerisierbar sind und/oder
(c) einer anorganischen multifunktionellen oder monofunktionellen Spezies, die endständige Gruppe(n) aufweist, die mit (a) copolymerisierbar sind.

7. Verfahren nach Anspruch 6, wobei das mindestens eine monofunktionelle Monomer eine (Meth)acrylsäure oder ein Derivat davon umfasst.

8. Verfahren nach Anspruch 6, wobei das multifunktionelle Monomer unter einer Alkyl- oder einer Poly[dialkylsiloxan]kette ausgewählt wird, die an jedem Ende mit einer vinylhaltigen Endgruppe terminiert ist.

9. Verfahren nach Anspruch 7, wobei
(a) das multifunktionelle Monomer an jedem Ende mit einer vinylhaltigen Endgruppe alkylkettenterminiert ist und
(b) das monofunktionelle anorganische Oligomer vorliegt und ein vinylbestücktes Poly[dialkylsiloxan] umfasst.

## Revendications

1. Polymère hybride ramifié pouvant être obtenu grâce à un procédé de polymérisation par addition, comprenant des chaînes organiques et des chaînes inorganiques, dans lequel:
(a) ledit polymère comprend au moins deux chaînes organiques qui sont liées de manière covalente par un pont autre qu'à leurs extrémités, dans lequel le polymère contient 1 à 50 % en mole de monomère multifonctionnel sur la base du nombre de moles du monomère monofonctionnel;
(b) au moins une chaîne inorganique est présente, soit sous la forme d'un groupe pendant lié de manière covalente sur une chaîne organique soit à l'intérieur du pont, et
(c) le polymère comprend un résidu d'un agent de transfert de chaîne et un résidu d'un initiateur dans lequel le résidu de l'agent de transfert de chaîne comprend 0,05 à 50 % en mole du copolymère, sur la base du nombre de moles du monomère monofonctionnel et dans lequel l'agent de transfert de chaîne est sélectionné parmi le groupe constitué des: alkyl thiols en C₂ à C₁₈, tels que le dodécane thiol, l'acide thioglycolique, le thioglycérol, la cystéine et la cystéamine et des oligomères contenant un groupe thiol tels que l'oligo(cystéine) ou un oligomère qui a été post-fonctionnalisé pour donner un groupe thiol, tel que le (di)thioglycolate d'oligoéthylène glycolyle.

2. Polymère selon la revendication 1, dans lequel la chaîne inorganique comprend un oligomère poly[dialkyl siloxane].

3. Polymère selon la revendication 2, dans lequel les chaînes d'oligomère poly[dialkyl siloxane] sont présentes comme « piliers » qui sont fixés à l'une (ou plus) des chaînes organiques liées.

4. Polymère selon la revendication 2, dans lequel le pont est de nature organique.

5. Polymère selon la revendication 2, dans lequel les chaînes d'oligomère poly[dialkyl siloxane] comprennent une partie du pont entre les chaînes organiques.

6. Procédé de synthèse de polymères hybrides organiques/inorganiques selon l'une quelconque des revendications précédentes par procédé de polymérisation par addition, qui comprend la réaction:
(a) d'un monomère monofonctionnel organique,
(b) d'une espèce de pontage multifonctionnelle organique hors terminaison ayant des groupes terminaux qui sont chacun copolymérisables avec (a) et/ou
(c) une espèce multifonctionnelle ou monofonctionnelle inorganique ayant un(des) groupe(s) terminal(aux) qui est(sont) copolymérisable(s) avec (a).

7. Procédé selon la revendication 6, dans lequel le au moins un monomère monofonctionnel comprend un acide (méth)acrylique ou son dérivé.

8. Procédé selon la revendication 6, dans lequel le monomère multifonctionnel est sélectionné parmi une chaîne alkyle ou poly[dialkyl siloxane] terminée à chaque extrémité par un groupe terminal contenant un groupe vinylique.

9. Procédé selon la revendication 7, dans lequel:
(a) le monomère multifonctionnel est une chaîne alkyle terminée à chaque extrémité par un groupe terminal contenant un groupe vinylique, et
(b) l'oligomère inorganique monofonctionnel est présent et comprend un poly[dialkyl siloxane] à extrémité vinylique.
